# EUROPÄISCHE PATENTSCHRIFT

(11) **EP 2 747 941 B1**
(45) Veröffentlichungstag und Bekanntmachung des Hinweises auf die Patenterteilung: **16.12.2015**
(21) Anmeldenummer: 12755811.2
(22) Anmeldetag: 17.08.2012
(51) Int. Cl.: B24C 1/10, F16C 33/14

(54) **VERFAHREN ZUR HERSTELLUNG VON LAGERSCHALEN FÜR GLEITLAGER**
METHOD FOR PRODUCING BEARING SHELLS FOR PLAIN BEARINGS
PROCÉDÉ DE FABRICATION DE COQUILLES DE COUSSINET POUR PALIERS LISSES

(30) Priorität: 07.12.2011 DE 102011087880
(43) Veröffentlichungstag der Anmeldung: 02.07.2014
(73) Patentinhaber: Federal-Mogul Wiesbaden GmbH, 65201 Wiesbaden (DE)
(72) Erfinder: ANDLER, Gerd, 65307 Bad Schwalbach (DE)
(74) Vertreter: Hoffmann Eitle
(86) Internationale Anmeldenummer: PCT/EP2012/066113
(87) Internationale Veröffentlichungsnummer: WO 2013/083302

(56) Entgegenhaltungen:
- WO-A1-2010/017984
- DE-A1- 3 715 323
- DE-A1-102005 023 541
- DE-A1-102007 042 833

## Beschreibung

### Technisches Gebiet

Die vorliegende Erfindung betrifft ein Verfahren zur Herstellung von Lagerschalen für Gleitlager. Sie betrifft ferner eine Lagerschale, die in einem solchen Verfahren hergestellt wurde.

Es ist bekannt, dass Zweistoff-Aluminium-Lagerschalen, die z.B. in Motoren von Kraftfahrzeugen eingesetzt werden, einer Ermüdung unterliegen. Solche Lagerschalen bestehen aus einem Stahlrücken und einer darauf mit einem Walzplattierprozess aufgebrachten Lagermetallschicht, die zum Beispiel aus einer Aluminium-Zinn-Legierung bestehen kann. Es kann zwischen dem Stahlrücken und der Lagermetallschicht eine weitere metallische Zwischenschicht eingefügt werden, um die mechanischen Eigenschaften der Lagerschale zu verbessern.

Allerdings sind die so aufgebauten Lagerschalen in ihrer Belastungsfähigkeit aufgrund des Herstellprozesses eines solchen Verbundmaterials und auch aufgrund der mechanischen Eigenschaften des Lagermetalls auf Lasten im Motor bis zu etwa 70 MPa begrenzt.

Um eine erhöhte Ermüdungsfestigkeit an Wellen, Zahnrädern, Federn oder auch Pleuelstangen zu erzeugen, werden deren Oberflächen gemäß dem Stand der Technik durch Stahl-, Keramik- und/oder Glaskugeln beschossen (sog. "Kugelstrahlen"). Dadurch werden im oberflächennahen Bereich Druckeigenspannungen erzeugt, die zu einer erhöhten Ermüdungsfestigkeit durch Kaltverfestigung führen.

### Stand der Technik

Die DD 259 021 A1 offenbart ein Radiallager von Hubkolbenverdichter-Triebwerken. Hierbei wird ein Radiallager, das als Verbundlager konzipiert ist, beschrieben, das hinsichtlich seiner Geometrie so ausgelegt ist, dass durch den Einbau in ein Gehäuse und die damit einhergehende Verformung eine definierte Druckvorspannung in der Gleitschicht entsteht. Hierdurch kann die Belastbarkeit des Lagers gesteigert werden.

Alternativ offenbart die DE 10 2007 028 888 A1 die gezielte mechanische Kaltverfestigung von Bereichen einer Kurbelwelle, d.h. eines Gegenläufers zu einem Lager, um dadurch die Festigkeit dieses Bauteils zu erhöhen. Dieser Effekt ist somit im Wesentlichen ähnlich zu dem der DD 259 021 A, wobei er sich jedoch auf die Kaltverfestigung eines Gegenläufers (im Gegensatz zu einer Lagerschale) bezieht.

Die DE 10 2005 055 708 A1 betrifft ein Verfahren zur Ausbildung von Kavitäten durch das Einstrahlen von Abrasivpartikeln.

Die DE 37 15 323 A1 bildet Stand der Technik, der unter den Oberbegriff von Anspruch 1 fällt. Die DE 10 2007 042 833 A1, WO 2010/017984 A1 und DE 10 2005 023 541 A1 bilden weiteren Stand der Technik.

### Darstellung der Erfindung

Die vorliegende Erfindung zielt darauf ab, ein Verfahren zur Erhöhung der Ermüdungsfestigkeit des Lagermetalles von Gleitlagerschalen zu entwickeln.

Die Lösung dieser Aufgabe erfolgt durch das in Patentanspruch 1 beschriebene Verfahren.

Demzufolge wird eine ansonsten fertigbearbeitete Lagerschale auf der Lagermetallseite, d.h. derjenigen Seite der Lagerschale, die im Gebrauch dem Gegenläufer gegenüberliegt, mit Partikeln aus Korund gestrahlt. Bevorzugt findet hier ein Strahlkorund Anwendung, der zu 80 - 99 % aus Aluminiumoxyd besteht. Dessen Härte nach der Mohs'schen Skala liegt nahe bei 10. Insbesondere handelt es sich bei den Lagerschalen, die typischerweise gebogen sind, bei der "Lagermetallseite" um die konkave Seite. Durch das Strahlen werden Druckeigenspannungen in dem gestrahlten Material der Lagerschale erzeugt.

Durch ein solches Verfahren wird die Lagerschale auf der Gleitlagerseite, d.h. im Wesentlichen das Lagermetall der Lagerschale, durch den Aufprall der Partikel verdichtet. Die Partikel treffen auf die Oberfläche auf und werden von dieser reflektiert. Hierdurch geben sie zumindest einen Teil ihres Impulses und ihrer kinetischen Energie auf die Lagerschale ab, was deren Material in der Nähe der Oberfläche verdichtet. Ferner werden lokal im Lagermetall Spannungen aufgebaut, während gleichzeitig die Oberflächenrauheit des Lagermetalls geringfügig erhöht wird. Durch die aufgrund des Strahlens erzeugten Druckeigenspannungen wird die Ermüdungsfestigkeit der Lagerschale gesteigert.

Ein besonderer Vorteil einer Strahlung durch Korund ergibt sich durch dessen hohe Härte (Mohs-Härte 9). Hierdurch verformen sich die Partikel beim Aufprall auf das Lager nur unwesentlich, was insbesondere als Vorteil mit sich bringt, dass die Partikel einen deutlich höheren Anteil ihrer kinetischen Energie auf die Lagerschale übertragen können als dies bei weniger harten Partikeln der Fall wäre, was zu einer besseren Verfestigung der bearbeiteten Lagerschale führt. Ein Vorteil der Verwendung von Strahlkorund ist dessen Abnutzungsresistenz, d.h. er kann gut wiederverwendet werden.

Bevorzugte Ausführungsformen werden in dem abhängigen Verfahrensanspruch 2 beschrieben.

Es wird bevorzugt, dass für das Strahlen der Partikel gegen das Lagermetall ein Druck zwischen 2,5 und 5 bar verwendet wird. Bei dem genannten Druck handelt es sich um den Druck, mit dem Luft (oder ein anderes Gas) in die Düse, die den Korund enthält, eingebracht wird. Hierdurch wird eine besonders gute Oberflächenverdichtung erzielt, wodurch sehr effizient Druckeigenspannungen erzeugt werden können, während im Gegenzug der Druck niedrig genug ist, um Beschädigungen der Lagerschale oder zu starke Oberflächenrauhigkeit durch eine übermäßig hohe Aufprallgeschwindigkeit der Partikel zu vermeiden.

Eine weitere Lösung der Aufgabe erfolgt durch die Lagerschale nach Anspruch 3. Diese weist die Vorteile auf, die sich aufgrund der Verfahrensschritte gemäß Ansprüchen 1 bis 2 ergeben.

Bevorzugt weist das Lagermetall im oberflächennahen Bereich ungestrahlt eine Härte von etwa 115 Hv 0,01 oder weniger auf, während es im gestrahlten Bereich eine Härte von etwa 130 Hv 0,01 oder mehr aufweist. Dies entspricht einer prozentualen Erhöhung der Härte um mehr als 10%, d.h. in etwa um 13%, in Bezug auf die Härte des ungestrahlten Bereichs. Hierdurch ergibt sich durch die Strahlung eine deutlich erhöhte Festigkeit des Lagermetalls, ohne dass ein anderer, weniger kostengünstiger Werkstoff als Lagermaterial verwendet werden muss.

Ferner hat es sich als vorteilhaft herausgestellt, dass die Lagerschale aus zwei oder mehr Schichten besteht. Dies hat als Vorteil, dass man hierdurch die positiven Eigenschaften von mehreren Materialien kombinieren kann. Insbesondere kann man z.B. als Lagermetall ein Metall nehmen, das sich durch eine hohe Oberflächenfestigkeit und Ermüdungsbeständigkeit auszeichnet, während für das Basismaterial ein möglichst hartes und langlebiges Material verwendet wird.

Außerdem wird bevorzugt, dass man als Lagermetall eine Aluminiumlegierung, bevorzugt eine Aluminium-Zinn-Legierung, verwendet und dass man das Lagermetall bevorzugt durch Walzplattierung auf einen Stahlrücken aufgebracht hat. Als Vorteil davon, dass man eine Aluminiumlegierung als Lagermetall verwendet, ergibt sich, dass dieses Material, insbesondere eine Aluminium-Zinn-Legierung, gute Eigenschaften als Lagermetall aufweist und auch gut charakterisiert ist. Ferner sind die Prozesse zur Herstellung des Verbundmaterials, also des Bandes, sowie zur Herstellung der Lagerschalen und deren Oberflächenbearbeitung bekannt und beherrscht.

Es ist vorteilhaft, dass das Lagermetall auf einen Stahlrücken durch Walzplattierung aufgebracht ist da dies ein kostengünstiges Verfahren ist, das sich durch eine gute Verbindung zwischen Stahlrücken und Plattierungsmaterial auszeichnet, während sich Stahl durch eine hohe Festigkeit, leichte Verarbeitbarkeit und geringe Kosten auszeichnet.
Es hat sich außerdem herausgestellt, dass es Vorteile mit sich bringt, wenn die Lagerschale aus drei Schichten besteht, wobei die mittlere Schicht bevorzugt aus Reinaluminium oder einer Aluminiumlegierung mit geringen Legierungselementen aus Mn, Cu, Ni und / oder Si besteht. Solche legierten Zwischenschichten finden Anwendung in Fällen, wo besonders hohe Anforderungen an die Ermüdungsfestigkeit gestellt werden. Insbesondere trägt auch die Zwischenschicht zu einer verbesserten Verbindung zwischen Lagermetall und Basismetall bei.

Die vorliegende Offenbarung betrifft ferner eine Vorrichtung, die eine oder mehrere Halterungen für eine oder mehrere Lagerschalen und eine Strahleinrichtung aufweist, die dafür geeignet ist, Korund gegen die in der/den Halterung(en) gehaltenen Lagerschale(n) zu strahlen. Diese ist insofern vorteilhaft, als sie es ermöglicht, ein Verfahren mit den bezüglich Ansprüchen 1 bis 2 genannten Vorteilen durchzuführen. Ferner kann dadurch, dass man eine spezielle Vorrichtung für die Durchführung dieses Verfahren hat, eine höhere Effizienz im Vergleich zu dem Fall, in dem man keine solche Vorrichtung hat, erzielen.

### Ausführliche Beschreibung einer bevorzugten Ausführungsform der Erfindung

Eine Lagerschale mit einer Lagermetallschicht aus AlSn, die weiter unten beschrieben ist, wird in einer weiter unten beschrieben Strahlvorrichtung für Lagerschalen mit Korundpartikeln, die aus einer Düse austreten, gestrahlt. Hierbei ist die Düse mit einer Luftzufuhr wie z.B. einem Gebläse verbunden, die Luft mit einem Luftdruck zwischen 2,5 und 5 bar, bevorzugt 3,0 bis 4,0 bar ausgibt. Die Korundpartikel werden in die Düse eingebracht, vom Luftstrom mitgerissen und anschließend durch den Luftstrom gegen die Lagerschale gestrahlt. Die Partikel, die gegen die Lagerschale gestrahlt werden, haben einen mittleren Durchmesser von 10 bis 60 µm.

Die Korundpartikel treffen auf das Lagermetall der Lagerschale auf, die im Wesentlichen senkrecht zur Strahlrichtung angeordnet ist, wobei aber selbstverständlich jeder andere Winkel zwischen Strahlrichtung und Lagerschale denkbar ist. Die Lagerschale wird in Bezug auf den Strahl aus Korundpartikeln während der Behandlung im Wesentlichen stationär gehalten.

Als Lagerschale wird, wie bereits erwähnt, eine Lagerschale mit einer AlSn-Lagermetallschicht verwendet. Die Lagermetallschicht kann Legierungselemente wie Ni, Mn, Si, Cu, Cr, Zr, V oder Mg enthalten. Diese sind jedoch für den eigentlichen Effekt, d.h. die Erzeugung von Druckeigenspannungen in der Oberfläche, nicht nötig. Typische Abmessungen solcher Lagerschalen sind z.B. ein Durchmesser von 60 mm bei einer Lagerbreite von 20 mm. Das Verfahren kann aber auch bei davon abweichenden Lagerabmessungen eingesetzt werden. Insbesondere besteht diese Lagerschale aus drei Schichten, nämlich aus einem Stahlrücken, der aus ca. 1,2 mm dickem Stahl vom Typ C 10 oder C 22 besteht, auf den eine Zwischenschicht aus AlCuMgSi und eine Schicht aus AlSnNiMn mit einer Dicke von zum Beispiel 0,15 bis 0,3 mm als Lagermetall aufgebracht ist.

Die Lagerschale ist so gebogen, dass die Aluminium-Zinn-Legierung auf einer Innenseite, d.h. auf einer konkaven Seite der Lagerschale liegt.

Das Lagermetall wird so lange gestrahlt, bis es eine Härte von etwa 130 Hv 0,01 aufweist, während das Lagermetall ungestrahlt eine Härte von etwa 115 Hv 0,01 aufweist. Insofern wurde die Härte des Lagermetalls um in etwa 13% erhöht. Bei den genannten Härtegraden handelt es sich jeweils um eine Vickers-Härte, die nach DIN EN ISO 6507 gemessen wird.

Das gestrahlte Gleitlager zeichnet sich im Vergleich zum Stand der Technik durch eine verbesserte Ermüdungsbeständigkeit und Verschleißeigenschaften aus.

Bei der oben erwähnten Strahlvorrichtung für Lagerschalen handelt es sich um eine Vorrichtung, die eine oder mehrere Halterungen für das Aufnehmen von einer oder mehreren Lagerschalen aufweist. Ferner weist sie mindestens eine Strahleinrichtung für Korund auf, mit der Korund gegen die in den Halterungen gehaltenen Lagerschalen gestrahlt werden kann. Die oben erwähnte Düse bildet einen Teil dieser Strahleinrichtung für Korund. An die Strahleinrichtung ist, wie oben erwähnt, eine Luftzufuhr angeschlossen, wobei aber auch jedes beliebige andere Gas anstelle von Luft verwendet werden kann.

## Patentansprüche

1. Verfahren zur Herstellung von Lagerschalen für Gleitlager, bei dem die Lagerschalen auf der Lagermetallseite mit Korundpartikeln gestrahlt werden, um somit Druckeigenspannungen in der gestrahlten Seite der Lagerschale zu erzeugen,
**dadurch gekennzeichnet, dass**
das Lagermetall der Lagerschale durch den Aufprall der Partikel verdichtet wird.

2. Verfahren nach Anspruch 1, bei dem die Partikel mit einem Druck von zwischen 2,5 bis 5 bar, bevorzugt zwischen 3 und 4 bar, gegen die Lagermetallseite gestrahlt werden.

3. Lagerschale, die in einem Verfahren nach einem der Ansprüche 1 bis 2 hergestellt wurde.

4. Lagerschale nach Anspruch 3, deren Lagermetall ungestrahlt eine Härte von maximal etwa 115 Hv 0,01 aufweist, während es im gestrahlten Bereich eine Härte von minimal etwa 130 Hv 0,01 aufweist und/oder bei der die Härte durch die Strahlung lokal um mehr als 10%, besonders bevorzugt mehr als 13%, bezogen auf den ungestrahlten Bereich, erhöht ist.

5. Lagerschale nach Anspruch 3 oder 4, bei dem eine Lagerschale, die aus zwei oder mehr Schichten besteht, gestrahlt wird.

6. Lagerschale nach Anspruch 5, bei dem als Lagermetall der Lagerschale eine Aluminiumlegierung, bevorzugt eine Aluminium-Zinn-Legierung, verwendet wird, und das Lagermetall bevorzugt durch Walzplattierung auf einen Stahlrücken aufgebracht ist.

7. Lagerschale nach einem der Ansprüche 5 bis 6, bei dem die Lagerschale aus drei Schichten besteht, wobei die mittlere Schicht bevorzugt aus Reinaluminium oder einer Aluminiumlegierung mit den Legierungselementen Mn, Cu, Ni, r, Zr, V, Mg und / oder Si besteht.

## Claims

1. Method for the manufacture of bearing shells for plain bearings, in which the bearing shells are blasted with corundum particles on the bearing metal side in order thus to generate inherent compressive stresses in the blasted side of the bearing shell, **characterised in that** the bearing metal of the bearing shell is compacted by the impact of the particles.

2. Method according to claim 1, in which the particles are blasted against the bearing metal side at a pressure of between 2.5 and 5 bars, preferably between 3 and 4 bars.

3. Bearing shell which has been made by a method according to either of claims 1 to 2.

4. Bearing shell according to claim 3, of which the bearing metal when unblasted has a hardness of not more than approximately 115 HV 0.01, whereas in the blasted region it has a hardness of not less than approximately 130 HV 0.01 and/or in which the hardness is increased by the blasting locally by more than 10%, particularly preferably more than 13%, referred to the blasted region.

5. Bearing shell according to claim 3 or 4, in which a bearing shell which consists of two or more layers is blasted.

6. Bearing shell according to claim 5, in which an aluminium alloy, preferably an aluminium-tin alloy, is used as the bearing metal of the bearing shell, and the bearing metal is preferably applied to a steel back by roll cladding.

7. Bearing shell according to either of claims 5 to 6, in which the bearing shell consists of three layers, wherein the middle layer preferably consists of pure aluminium or an aluminium alloy with the alloying elements Mn, Cu, Ni, Cr, Zr, V, Mg and/or Si.

## Revendications

1. Procédé de fabrication de coquilles de coussinet pour paliers lisses, où les coquilles de coussinet sont soumises à un grenaillage de particules de corindon sur le côté du métal antifriction, pour générer ainsi des contraintes de compression internes sur le côté grenaillé de la coquille de coussinet,
**caractérisé en ce que**
le métal antifriction de la coquille de coussinet est densifié par l'impact des particules.

2. Procédé selon la revendication 1, où les particules sont projetées sur le côté du métal antifriction avec une pression comprise entre 2,5 et 5 bar, préférentiellement entre 3 et 4 bar.

3. Coquille de coussinet, fabriquée avec un procédé selon la revendication 1 ou 2.

4. Coquille de coussinet selon la revendication 3, dont le métal antifriction non grenaillé présente une dureté maximale de quelque 115 Hv 0,01, alors qu'il présente une dureté minimale de quelque 130 Hv 0,01 dans la zone grenaillée et/ou où la dureté est augmentée localement par le grenaillage de plus de 10 %, préférentiellement de plus de 13 % par rapport à la zone non grenaillée.

5. Coquille de coussinet selon la revendication 3 ou 4, où une coquille de coussinet constituée d'au moins deux couches est grenaillée.

6. Coquille de coussinet selon la revendication 5, où un alliage d'aluminium, préférentiellement un alliage aluminium- étain est employé comme métal antifriction de la coquille de coussinet, et où le métal antifriction est préférentiellement appliqué par plaquage par laminage sur un support en acier.

7. Coquille de coussinet selon la revendication 5 ou 6, où la coquille de coussinet est constituée de trois couches, la couche centrale étant préférentiellement en aluminium pur ou en un alliage d'aluminium avec les éléments d'alliage Mn, Cu, Ni, r, Zr, V, Mg et/ou Si.
